# EUROPÄISCHE PATENTANMELDUNG

(11) **EP 3 846 301 A1**
(43) Veröffentlichungstag der Anmeldung: **07.07.2021**
(21) Anmeldenummer: 20202182.0
(22) Anmeldetag: 16.10.2020
(51) Int. Cl.: H02J 3/32, H02J 7/00

(54) **ELEKTRISCHES VERSORGUNGSSYSTEM FÜR EIN GEBÄUDE**

(30) Priorität: 02.01.2020 DE 102020100008
(71) Anmelder: innogy SE, 45128 Essen (DE)
(72) Erfinder: Kempgens, Maren, 46238 Bottrop (DE); Schneider, Michael, 44388 Dortmund (DE); Sund, Karsten, 45359 Essen (DE)
(74) Vertreter: Cohausz & Florack

(57) **Zusammenfassung**

Die Anmeldung betrifft ein elektrisches Versorgungssystem (100) für ein Gebäude (136), umfassend mindestens zwei stationäre Batterieanordnungen (102, 104), jeweils umfassend mindestens eine wiederaufladbare Batterieeinheit (108) und mindestens einen Wechselrichter (106), mindestens eine Schaltungsanordnung (110) mit mindestens einem Schaltelement (110.1, 110.2), zumindest eingerichtet zum elektrischen Verbinden der Batterieanordnungen (102, 104) mit einem Gebäudeversorgungsnetz (114) des Gebäudes (136), mindestens eine Batteriesteuerung (112), eingerichtet zum Ansteuern der Schaltungsanordnung (110) bei einem Einspeisevorgang zum Bewirken einer elektrischen Verbindung des Gebäudeversorgungsnetzes () mit den Batterieanordnungen (102, 104), derart, dass nur durch eine erste stationäre Batterieanordnung (102, 104) der mindestens zwei stationären Batterieanordnungen (102, 104) elektrische Leistung in das Gebäudeversorgungsnetz (114) eingespeist wird bis zum Erreichen mindestens eines vorgegebenen Umschaltkriteriums.

## Beschreibung

Die Anmeldung betrifft ein elektrisches Versorgungssystem für ein Gebäude mit Batterieanordnungen. Darüber hinaus betrifft die Anmeldung ein Verfahren zum Betreiben eines Versorgungssystems und ein Computerprogramm.

In der Regel verfügt ein Gebäude, wie ein Wohngebäude, Bürogebäude, Fabrikgebäude etc., über mindestens ein (gebäudeinternes) elektrisches Versorgungsystem. Ein elektrisches Versorgungsystem dient insbesondere zum Versorgen elektrischer Verbraucher des Versorgungssystems mit elektrischer Energie bzw. elektrischer Leistung.

Hierzu ist es üblich, dass das elektrische Versorgungssystem über einen Eingangsanschluss (auch elektrischer Hausanschluss genannt) verfügt, um das elektrische Versorgungssystem elektrisch mit einem externen Versorgungsnetz (z.B. ein öffentliches Mittelspannungsnetz oder Niederspannungsnetz, wie ein Ortsnetzt) zu verbinden. Über ein Gebäudeversorgungsnetz kann dann die elektrische Leistung (bzw. Strom bzw. Energie) zu den elektrischen Verbrauchern transportiert bzw. übertragen werden. Ein Gebäudeversorgungsnetz kann insbesondere eine Mehrzahl von elektrischen Leitungen umfassen, die zumindest teilweise beispielsweise in Wänden, Decken, Böden etc. verbaut sein können, aber auch durch einen das Gebäude umgebenden Boden verlaufen können.

Elektrische Versorgungsysteme für Gebäude weisen vermehrt mindestens eine (eigene) Energiequelle auf, wie eine Photovoltaikanlage, Windkraftanlage, KWK-Anlage etc. Zudem kann ein elektrisches Versorgungssystem über eine stationäre Batterieanordnung verfügen, umfassend mindestens eine wiederaufladbare Batterieeinheit und mindestens einen Wechselrichter. Die Batterieeinheit ist insbesondere aus einer Vielzahl von Batteriezellen gebildet, um elektrische Energie zu speichern und bei Bedarf einzuspeisen. Der Wechselrichter ist zumindest eingerichtet, elektrische Leistung zumindest frequenzsynchron zu der Gebäudeversorgungsnetzfrequenz in das Gebäudeversorgungsnetz einzuspeisen.

Wenn das elektrische Versorgungsnetz beispielsweise eine Photovoltaikanlage und eine Batterieanordnung aufweist, kann zu Zeiten, in denen mehr elektrische Leistung generiert wird, als zeitgleich in dem elektrischen Versorgungsnetz durch den mindestens einen Verbraucher verbraucht wird, die überschüssige Leistung in der Batterieanordnung zwischengespeichert werden. Und zu Zeiten, in denen mehr elektrische Leistung in dem elektrischen Versorgungsnetz verbraucht wird, als zeitgleich generiert wird, kann die zusätzlich benötigte Leistung durch die Batterieanordnung in das Gebäudeversorgungsnetz eingespeist werden.

Problematisch bei den bekannten elektrischen (Gebäude-)Versorgungsnetzen ist die Erweiterung eines solchen Systems, insbesondere zur Vergrößerung der vorhandenen Batteriekapazität. Wenn bei einem elektrischen (Gebäude-)Versorgungsnetz ein Bedarf an einer Batterieanordnung mit einer größeren Batteriekapazität festgestellt wird, wird in der Regel die vorhandene Batterieanordnung durch eine neue Batterieanordnung mit größerer Batteriekapazität ersetzt. Nachteilig hieran ist, dass häufig eine grundsätzlich funktionsfähige Batterieanordnung ersetzt wird. Zudem ist ein solcher Austausch mit erheblichen Kosten verbunden.

Daher liegt der Anmeldung die Aufgabe zugrunde, ein elektrisches Versorgungssystem für ein Gebäude zur Verfügung zu stellen, welches die Nachteile des Standes der Technik zumindest reduziert und insbesondere eine einfachere Batteriekapazitätserweiterung eines elektrischen Versorgungssystems ermöglicht.

Die Aufgabe wird gemäß einem ersten Aspekt der Anmeldung gelöst durch ein elektrisches Versorgungssystem für ein Gebäude gemäß Anspruch 1. Das elektrische Versorgungssystem umfasst mindestens zwei stationäre Batterieanordnungen, jeweils umfassend mindestens eine wiederaufladbare Batterieeinheit und mindestens einen Wechselrichter. Das elektrische Versorgungssystem umfasst mindestens eine Schaltungsanordnung mit mindestens einem Schaltelement, zumindest eingerichtet zum elektrischen Verbinden der Batterieanordnungen mit einem Gebäudeversorgungsnetz des Gebäudes. Das elektrische Versorgungssystem umfasst mindestens eine Batteriesteuerung, eingerichtet zum Ansteuern der Schaltungsanordnung bei einem Einspeisevorgang zum Bewirken einer elektrischen Verbindung des Gebäudeversorgungsnetzes mit den Batterieanordnungen, derart, dass nur durch eine erste stationäre Batterieanordnung der mindestens zwei stationären Batterieanordnungen elektrische Leistung in das Gebäudeversorgungsnetz eingespeist wird, bis zum Erreichen mindestens eines vorgegebenen Umschaltkriteriums.

Indem im Gegensatz zum Stand der Technik anmeldungsgemäß ein elektrisches Versorgungssystem mit zwei Batterieanordnungen bereitgestellt wird, die über eine Schaltungsanordnung mit dem Gebäudeversorgungsnetz elektrisch koppelbar bzw. verbindbar sind, wird insbesondere eine einfachere Batteriekapazitätserweiterung eines elektrischen Versorgungssystems ermöglicht. Insbesondere ist erkannt worden, dass zwei (oder mehr) Batterieanordnungen mit geringen Verlusten (bzw. einem hohen Wirkungsgrad) (nur dann) betrieben werden können, wenn die mindestens zwei Batterieanordnungen (zumindest in einem Normalbetriebsmodus) sukzessive zugeschaltet werden, um elektrische Leistung (bei Bedarf) in das Gebäudeversorgungsnetz einzuspeisen.

Anmeldungsgemäß ist ein elektrisches (Gebäude-) Versorgungsnetz vorgesehen. Das elektrische Versorgungsnetz umfasst mindestens zwei Batterieanordnungen. Es versteht sich, dass drei oder mehr Batterieanordnungen (beispielsweise bis zu fünf Batterieanordnungen) vorgesehen sein können. Diese können fest in dem Gebäude installiert sein.

Jede Batterieanordnung verfügt über eine Batterieeinheit. Eine Batterieeinheit weist eine Vielzahl von mit einander verbundenen Batteriezellen auf, eingerichtet zum Speichern elektrischer Energie. Beispielsweise kann als Batterieeinheit ein Lithium basierter Akkumulator vorgesehen sein. Es versteht sich, dass auch andere Akkumulatortypen eingesetzt werden können. Hierbei können die zumindest zwei Batterieanordnungen als Batterieeinheit unterschiedliche Akkumulatortypen aufweisen.

Neben der Batterieeinheit verfügt jede Batterieanordnung anmeldungsgemäß über einen Wechselrichter. Der jeweilige Wechselrichter ist insbesondere auf die Batterieeinheit, insbesondere die jeweilige Kapazität der Batterieeinheiten, abgestimmt. Der Wechselrichter stellt insbesondere sicher, dass ein durch eine Batterieanordnung eingespeister Strom frequenzsynchron (und vorzugsweise phasensynchron) zu der Gebäudeversorgungsnetzfrequenz (z.B. 50 Hz oder 60 Hz) einspeisbar ist. Für einen Ladevorgang kann der mindestens eine Wechselrichter (oder ein weiterer Wechselrichter) eine entsprechende (umgekehrte) Funktionalität bereitstellen. Für einen Ladevorgang kann auch ein Ladegerät vorgesehen sein.

Über eine (gemeinsame) Schaltungsanordnung sind die mindestens zwei Batterieanordnungen an ein gebäudeinternes Gebäudeversorgungsnetz elektrisch angebunden. Ein gebäudeinternes Gebäudeversorgungsnetz weist vorliegend insbesondere eine Vielzahl von elektrischen Leitungen auf. Die Leitungen können insbesondere durch (und/oder auf) Böden, Wände, Decken verlaufen, aber auch auf einem (an das Gebäude angrenzenden) Grundstück des Gebäudes, wie einem Garten, Parkbereich etc.

An dem Gebäudeversorgungsnetz kann insbesondere mindestens ein elektrischer Verbraucher (z.B. Waschmaschine, Spülmaschine, Beleuchtung, Ladestation etc.), vorzugsweise eine Mehrzahl von elektrischen Verbrauchern, und/oder mindestens ein elektrischer (dezentraler) Erzeuger (z.B. Photovoltaikanlage, Windkraftanlage etc.) angeschlossen sein.

Die Schaltungsanordnung weist mindestens ein Schaltelement auf, eingerichtet zum Herstellen (und Trennen) einer elektrischen Verbindung. Insbesondere kann eine Mehrzahl von Schaltelementen vorgesehen sein, vorzugsweise pro Batterieanordnung ein der jeweiligen Batterieanordnung zugeordnetes Schaltelement. Die Schaltungsanordnung ist ansteuerbar ausgebildet. Durch ein Ansteuersignal kann insbesondere ein Schaltvorgang bewirkt werden, um beispielsweise eine elektrische Verbindung zwischen einer Batterieanordnung und dem Gebäudeversorgungsnetz herzustellen oder zu trennen. Insbesondere kann ein Schaltzustand des mindestens einen Schaltelements steuerbar sein.

Anmeldungsgemäß ist eine Batteriesteuerung vorgesehen. Die Batteriesteuerung ist insbesondere eingerichtet, die Schaltungsanordnung anzusteuern, um insbesondere einen Schaltvorgang (Schließen oder Öffnen mindestens eines Schaltelements) zu bewirken.

In der Batteriesteuerung kann insbesondere mindestens eine Steuerregel implementiert sein, die beispielsweise von einem Prozessor ausführbar ist. Beispielsweise kann eine Mehrzahl an Steuerregeln implementiert sein.

Anmeldungsgemäß ist bei einem Einspeisevorgang bzw. während eines Einspeisevorgangs, also wenn ein Strom bzw. eine Leistung in das Gebäudeversorgungsnetz eingespeist wird, vorgesehen, dass die Batteriesteuerung die Schaltungsanordnung derart ansteuert, dass bis zum Erreichen bzw. bis zur Detektion einer Erfüllung mindestens eines Umschaltkriteriums das mindestens eine Schaltelemente einen derartigen Schaltzustand aufweist, dass nur eine einzige Batterieanordnung der mindestens zwei Batterieanordnungen Leistung in das Gebäudeversorgungsnetz einspeist. Insbesondere kann die Batteriesteuerung bewirken, dass eine elektrische Verbindung nur zwischen einer (bestimmten) ersten Batterieanordnung und dem Gebäudeversorgungsnetz durch die Schaltungsanordnung hergestellt ist, während die elektrische Verbindung zwischen dem Gebäudeversorgungsnetz und der mindestens einen weiteren Batterieanordnung durch die Schaltungsanordnung getrennt ist.

Durch eine derartige Steuerregel können die mindestens zwei Batterieanordnungen sukzessive betrieben werden. Der Wirkungsgrad kann signifikant verbessert werden.

Unter einem Umschaltkriterium ist insbesondere eine zu erfüllende Bedingung zu verstehen, die bewirkt, dass insbesondere eine Änderung der elektrischen Verbindung in der Schaltungsanordnung bewirkt wird. Die Umschaltbedingung ist insbesondere so gewählt, dass die Batterieanordnung effizient und optimiert betreibbar sind. Ein Umschaltkriterium kann ein Gebäudeversorgungsnetz basiertes Kriterium und/oder ein Batterieanordnung basiertes Kriterium sein, wie ein bestimmter Batteriezustand zumindest einer der Batterieanordnungen.

Eine stationäre Batterieanordnung meint insbesondere eine Batterieanordnung, die dauerhaft installiert ist, insbesondere fest mit der Schaltungsanordnung verbunden ist, und insbesondere jederzeit mit dem Gebäudeversorgungsnetz elektrisch verbunden werden kann, um Strom einzuspeisen. Eine stationäre Batterieanordnung ist insbesondere eine fest in dem Gebäude verbaute Batterieanordnung.

Eine mobile Batterieanordnung meint vorliegend im Gegensatz zu der stationären Batterieanordnung eine Batterieanordnung, die beweglich ist und nur temporär an das Gebäudeversorgungsnetz angeschlossen ist. Ein typisches Beispiel einer mobilen Batterieanordnung ist die Batterieanordnung eines Elektrofahrzeugs, die temporär an das Gebäudeversorgungsnetz z.B. über eine Ladestation angeschlossen werden kann.

Gemäß einer ersten Ausführungsform des anmeldungsgemäßen elektrischen Versorgungssystems kann die Batteriesteuerung eingerichtet sein zum Ansteuern der Schaltungsanordnung zum Bewirken einer elektrischen Verbindung des Gebäudeversorgungsnetzes mit den Batterieanordnungen, derart, dass nur durch die zweite stationäre Batterieanordnung der mindestens zwei stationären Batterieanordnungen elektrische Leistung in das Gebäudeversorgungsnetz eingespeist wird, wenn das mindestens eine vorgegebene Umschaltkriterium erreicht ist. Anders ausgedrückt kann bei dieser besonders bevorzugten Ausführungsform zunächst ein Strom nur durch eine erste Batterieanordnung eingespeist werden und nach Erreichen des mindestens einen Umschaltkriteriums nur durch eine zweite Batterieanordnung. Ein sukzessiver Betrieb der mindestens zwei Batterieanordnungen wird sichergestellt.

Für den Fall, dass drei Batterieanordnungen vorgesehen sind, kann die Batteriesteuerung eingerichtet sein zum Ansteuern der Schaltungsanordnung zum Bewirken einer elektrischen Verbindung des Gebäudeversorgungsnetzes mit den Batterieanordnungen, derart, dass nur durch die dritte stationäre Batterieanordnung der mindestens drei stationären Batterieanordnungen elektrische Leistung in das Gebäudeversorgungsnetz eingespeist wird, wenn mindestens ein weiteres vorgegebenes Umschaltkriterium erreicht ist (entsprechend kann bei jeder weiteren Batterieanordnung verfahren werden).

Gemäß einer bevorzugten Ausführungsform des anmeldungsgemäßen elektrischen Versorgungssystems kann das mindestens eine vorgegebene Umschaltkriterium ein vorgegebener erster Ladezustandsgrenzwert sein. Das elektrische Versorgungssystem kann mindestens eine Detektionseinheit umfassen, eingerichtet zum Detektieren eines Unterschreitens des vorgegebenen ersten Ladezustandsgrenzwerts durch den augenblicklichen Ladezustand der augenblicklich einspeisenden Batterieanordnung.

Der erste Ladezustandsgrenzwert kann insbesondere ein unterer zulässiger Ladezustandswert einer Batterieanordnung sein (der beispielsweise angibt, ab wann die jeweilige Batterieanordnung nicht mehr effizient betrieben werden kann). Für jede Batterieanordnung kann ein separater erster Ladezustandsgrenzwert vorgegeben sein.

Der erste Ladezustandsgrenzwert kann beispielsweise zwischen 10 und 40 %, vorzugsweise zwischen 15 und 30 % liegen (z.B. 20 %). Die Detektionseinheit kann insbesondere mindestens einen Ladezustandssensor umfassen oder verbunden sein, um insbesondere (nahezu) kontinuierlich den Ladezustand einer Batterieanordnung zu erfassen. Insbesondere kann hierdurch der Ladezustand des jeweiligen Batteriespeichers überwacht werden. Insbesondere kann die Detektionseinheit den jeweiligen Ladezustand sämtlicher Batterieanordnungen bzw. Batterieeinheiten erfassen.

Wird detektiert, dass der Ladezustand der Batterieanordnung (bzw. der entsprechenden Batterieeinheit) unterhalb des vorgegebenen ersten Ladezustandsgrenzwert liegt, beispielsweise unterhalb von 20 %, dann ist das Umschaltkriterium erreicht. Dann, also bei Erreichen des Umschaltkriteriums, kann insbesondere, wie zuvor beschrieben wurde, die Batteriesteuerung die Schaltungsanordnung derart ansteuern, dass nur durch eine zweite Batterieanordnung Leistung eingespeist wird, also insbesondere die Verbindung zwischen der ersten Batterieanordnung und dem Gebäudeversorgungsnetz getrennt wird und (nur) die Verbindung zwischen der zweiten Batterieanordnung und dem Gebäudeversorgungsnetz hergestellt wird.

Wenn eine dritte Batterieanordnung vorgesehen ist, kann in entsprechender Weise die zweite Batterieanordnung überwacht werden und bei Erreichen eines Ladezustands der zweiten Batterieanordnung, der unterhalb eines vorgegebenen (weiteren) ersten Ladezustandsgrenzwerts liegt, kann dann die Verbindung zwischen der zweiten Batterieanordnung und dem Gebäudeversorgungsnetz getrennt werden und (nur) die Verbindung zwischen der dritten Batterieanordnung und dem Gebäudeversorgungsnetz hergestellt werden. Die Verbindung zwischen der ersten Batterieanordnung und dem Gebäudeversorgungsnetz bleibt in diesem Fall getrennt.

Es versteht sich, dass Detektionseinheit und Batteriesteuerung zumindest teilweise durch eine gemeinsame Entität gebildet sein können.

Wie ausgeführt wurde, können unterschiedliche Batterieanordnungen mit erste, zweite etc. bezeichnet sein. Diese unterschiedlichen Bezeichnungen dienen insbesondere dazu, die Batterieanordnungen voneinander zu unterscheiden. Ferner kann hierdurch insbesondere eine Nutzungsreihenfolge der Batterieanordnungen zumindest während eines Einspeisevorgangs festgelegt sein. So kann insbesondere stets bei einem Start eines Einspeisevorgangs, also insbesondere bei Erhalt einer entsprechenden Anforderung (z.B. aufgrund eines Gebäudeversorgungsnetzzustands, der eine Einspeisung zusätzlicher Leistung erfordert), zunächst nur durch die derzeit in der Nutzungsreihenfolge als erste Batterieanordnung bestimmte Batterieanordnung Leistung eingespeist werden (sofern ein Umschaltkriterium nicht erreicht ist; liegt beispielsweise bereits bei Start eines Einspeisevorgangs der Ladezustand einer ersten Batterieanordnung unterhalb des vorgegebenen Ladezustandsgrenzwerts, kann direkt nur durch die derzeit als zweite Batterieanordnung bestimmte Batterieanordnung Leistung eingespeist werden).

Gemäß einer Ausführungsform des anmeldungsgemäßen elektrischen Versorgungssystems kann die Batteriesteuerung eingerichtet sein zum Festlegen einer Nutzungsreihenfolge der mindestens zwei stationären Batterieanordnungen. Die Nutzungsreihenfolge kann zumindest festlegen, welche stationäre Batterieanordnung der mindestens zwei stationären Batterieanordnungen bei einer Anforderung zur Durchführung eines Einspeisevorgangs die erste stationäre Batterieanordnung ist (und welche die zweite, dritte etc. ist). Die Nutzungsreihenfolge kann in der Batteriesteuerung gespeichert sein. Die Ansteuerung der Schaltungsanordnung erfolgt durch die Batteriesteuerung insbesondere in Abhängigen der gespeicherten (und derzeit gültigen) Nutzungsreihenfolge.

Gemäß einer besonders bevorzugten Ausführungsform kann die Batteriesteuerung eingerichtet sein zum Ändern der Nutzungsreihenfolge nach Ablauf eines Zeitkriteriums, insbesondere einer vorgegebenen Zeitspanne (z.B. x Tage, x Wochen). Insbesondere kann das Zeitkriterium so gewählt sein, dass eine regelmäßige Änderung der Nutzungsreihenfolge erfolgt. Vorzugsweise kann eine Zeitspanne zwischen 1 und 50 Tage, vorzugsweise zwischen 3 und 20 Tage (z.B. 7 Tage bzw. 1 Woche) liegen.

Die Änderung der Nutzungsreihenfolge kann insbesondere auf einem rollierenden Wechselschema basieren. Dies meint insbesondere, dass bei einer Änderung der Nutzungsreihenfolge die derzeit erste Batterieanordnung zur letzten Batterieanordnung in der Reihenfolge wird und alle anderen Batterieanordnungen um eine Position nach vorne aufrücken. Die Implementierung eines rollierenden Wechselschemas hat den Vorteil, dass sämtliche Batterieanordnungen (im Wesentlichen und/oder im Durchschnitt) gleich lang genutzt und insbesondere belastet werden. Hierdurch reduziert sich die Leistungsfähigkeit der Batterieanordnungen während des Betriebs im Wesentlichen in ähnlicher Weise, so dass die Lebensdauer der Batterieanordnungen insgesamt gesteigert werden kann.

Es versteht sich, dass ein Einspeisevorgang zumindest dann beendet wird, wenn sämtliche Batterieanordnungen entladen sind, also deren jeweiliger Ladezustand jeweils unter einem zulässigen minimalen Ladezustandsgrenzwert liegt.

Vorzugsweise kann auch das Laden der Batterieanordnungen in einer sukzessiven Weise erfolgen. Hierdurch kann der Wirkungsgrad noch weiter verbessert werden bzw. die Verluste noch weiter verringert werden. Gemäß einer besonders bevorzugten Ausführungsform des elektrische Versorgungssystems kann die Batteriesteuerung eingerichtet sein zum Ansteuern der Schaltungsanordnung bei einem Ladevorgang zum Bewirken einer elektrischen Verbindung des Gebäudeversorgungsnetzes mit den Batterieanordnungen, derart, dass nur die erste stationäre Batterieanordnung der mindestens zwei stationären Batterieanordnungen geladen wird, bis zum Erreichen eines vorgegebenen Ladekriteriums. Die Batteriesteuerung kann insbesondere eingerichtet sein zum Ansteuern der Schaltungsanordnung bei einem Ladevorgang zum Bewirken einer elektrischen Verbindung des Gebäudeversorgungsnetzes mit den Batterieanordnungen, derart, dass nur die zweite stationäre Batterieanordnung der mindestens zwei stationären Batterieanordnungen geladen wird, wenn das Ladekriterium erreicht ist. In entsprechender Weise kann fortgefahren werden, wenn drei oder mehr Batterieanordnungen vorgesehen sind.

Es versteht sich, dass eine Batterieanordnung (oder die Schaltungsanordnung oder dergleichen) über eine Ladeeinheit bzw. ein Ladegerät verfügen kann, um die jeweilige Batterieeinheit wiederaufzuladen.

Gemäß einer bevorzugten Ausführungsform des elektrischen Versorgungssystems kann das vorgegebene Ladekriterium ein vorgegebener zweiter Ladezustandsgrenzwert sein. Das elektrische Versorgungssystem kann mindestens eine Detektionseinheit (vorzugsweise die zuvor beschriebene Detektionseinheit) umfassen, eingerichtet zum Detektieren eines Überschreiten des vorgegebenen zweiten Ladezustandsgrenzwerts durch den augenblicklichen Ladezustand der augenblicklich ladenden Batterieanordnung.

Der zweite Ladezustandsgrenzwert kann insbesondere ein oberer zulässiger Ladezustandswert einer Batterieanordnung sein. Für jede Batterieanordnung kann ein separater zweiter Ladezustandsgrenzwert vorgegeben sein. Der zweite Ladezustandsgrenzwert kann beispielsweise zwischen 100 und 60 %, vorzugsweise zwischen 90 und 70 % liegen (z.B. 80 %). Die Detektionseinheit kann insbesondere mindestens einen Ladezustandssensor umfassen oder mit einem Ladezustandssensor verbunden sein, um insbesondere (nahezu) kontinuierlich den Ladezustand einer Batterieanordnung zu erfassen. Insbesondere kann hierdurch der Ladezustand des jeweiligen Batteriespeichers überwacht werden.

Insbesondere kann die Detektionseinheit den jeweiligen Ladezustand sämtlicher Batterieanordnungen bzw. Batterieeinheiten erfassen. Wird detektiert, dass der Ladezustand der Batterieanordnung (bzw. der entsprechenden Batterieeinheit) oberhalb des vorgegebenen zweiten Ladezustandsgrenzwerts liegt, beispielsweise oberhalb von 80 %, dann ist das Ladekriterium erreicht. Dann, also bei Erreichen des Ladekriteriums, kann insbesondere, wie zuvor beschrieben wurde, die Batteriesteuerung die Schaltungsanordnung derart ansteuern, dass nur die zweite Batterieanordnung geladen wird, also insbesondere die Verbindung zwischen der ersten Batterieanordnung und dem Gebäudeversorgungsnetz getrennt wird und (nur) die Verbindung zwischen der zweiten Batterieanordnung und dem Gebäudeversorgungsnetz hergestellt wird.

Wenn eine dritte Batterieanordnung vorgesehen ist, kann in entsprechender Weise die zweite Batterieanordnung überwacht werden und bei Erreichen eines Ladezustands der zweiten Batterieanordnung, der oberhalb eines vorgegebenen (weiteren) zweiten Ladezustandsgrenzwerts liegt, kann die Verbindung zwischen der zweiten Batterieanordnung und dem Gebäudeversorgungsnetz getrennt werden und (nur) die Verbindung zwischen der dritten Batterieanordnung und dem Gebäudeversorgungsnetz hergestellt werden. Die Verbindung zwischen der ersten Batterieanordnung und dem Gebäudeversorgungsnetz bleibt in diesem Fall getrennt.

Im Zusammenhang mit dem Ladezustandsgrenzwert werden die Begriffe erste, zweite etc. (nur) für eine unterschiedliche Bezeichnung der Grenzwerte verwendet.

Ferner ist erkannt worden, dass es bei einem anmeldungsgemäßen elektrischen Gebäudeversorgungsnetz während (kurzer) Zeitspannen zu einem Bedarf an hoher Leistung kommen kann. Beispielsweise für den Fall, dass eine Ladestation in dem Versorgungssystem vorgesehen ist, kann es aufgrund einer Ladeanforderung eines Elektrofahrzeugs für einen bestimmten Zeitraum zu einer hohen temporären Leistungsanforderung kommen.

Gemäß einer bevorzugten Ausführungsform wird vorgeschlagen, dass insbesondere zusätzlich zu dem vorgenannten (Batterieanordnung basierten) Umschaltkriterium (insbesondere der erste Ladezustandsgrenzwert) ein weiteres Umschaltkriterium vorgegeben ist.

Gemäß einer Ausführungsform des anmeldungsgemäßen elektrischen Versorgungssystems kann das mindestens eine vorgegebene (weitere) Umschaltkriterium ein vorgegebener Leistungsgrenzwert sein. Die Batteriesteuerung kann eingerichtet sein zum Ansteuern der Schaltungsanordnung bei einem Einspeisevorgang zum Bewirken einer elektrischen Verbindung des Gebäudeversorgungsnetzes mit den Batterieanordnungen, derart, dass zumindest durch die zwei stationären Batterieanordnung elektrische Leistung (gleichzeitig) in das Gebäudeversorgungsnetz eingespeist wird, wenn eine bereitgestellte Leistungsanforderung den mindestens einen vorgegebenen Leistungsgrenzwert (z.B. zwischen 3 und 20 kW, vorzugsweise zwischen 5 und 12 kW) übersteigt. Wenn drei oder mehr Batterieanordnungen vorgesehen sind, kann insbesondere eine Mehrzahl an gestuften Leistungsgrenzwerten vorgesehen sein, um eine gestufte Zuschaltung von Batterieanordnungen abhängig von unterschiedlichen Leistungsanforderungsstufen zu ermöglichen.

Wie bereits beschrieben wurde, kann das Versorgungssystem beispielsweise eine Ladestation für Elektrofahrzeuge umfassen. Eine Ladestation kann mindestens einen Ladepunkt umfassen, eingerichtet zum Abgeben von elektrischer Leistung (bzw. Energie bzw. Strom). Vorzugsweise kann der Ladepunkt auch zur Aufnahme von elektrischer Leistung eingerichtet sein. Der Ladepunkt kann insbesondere eine elektrische Schnittstelle sein, beispielsweise in Form eines fest angeschlagenen Ladekabels mit einem Ladeanschluss (z.B. Ladestecker) und/oder einem Ladenanschluss zum Anschließen eines Ladekabels (z.B. eine Ladesteckeraufnahme, beispielsweise in Form einer Ladesteckerbuchse). Unter einem fest angeschlagenen Ladekabel ist insbesondere zu verstehen, dass ein Nutzer das Ladekabel nicht zerstörungsfrei von der Ladevorrichtung trennen kann.

Die Ladestation kann eine Ladevorrichtung umfassen, die in herkömmlicher Weise über Komponenten verfügen kann, um einen Stromfluss von einer Stromquelle (z.B. insbesondere dem Gebäudeversorgungsnetz) über den Ladepunkt und einem Ladekabel zu einer Batterie eines Elektrofahrzeugs und vice versa zu ermöglichen. Hierdurch kann ein elektrisch betriebenes Fahrzeug bzw. dessen elektrischer Energiespeicher (insbesondere die Traktionsbatterie) geladen (oder entladen) werden. Unter einem Elektrofahrzeug ist vorliegend ein Fahrzeug zu verstehen, das zumindest teilweise elektrisch betrieben werden kann und einen wiederaufladbaren elektrischen Speicher umfasst.

Die Ladevorrichtung kann in der Ladestation integriert oder als "Wallbox" gebildet sein. Auch kann die gesamte Ladestation als Wallbox oder Ladesäule gebildet sein. Insbesondere kann die Ladevorrichtung ein Teil der Ladestation sein. Auch kann die Ladevorrichtung, insbesondere die Komponenten bzw. die Ladetechnik, in einer Wand oder einem Boden integriert sein. Es versteht sich, dass eine bidirektionale Strom- bzw. Leistungsübertragung über die Ladekabel und die Ladetechnik der Ladevorrichtung erfolgen kann

Gemäß einer weiteren Ausführungsform des anmeldungsgemäßen elektrischen Versorgungssystems kann die Batteriesteuerung eingerichtet sein zum Ansteuern der Ladestation, derart, dass elektrische Leistung durch die mobile Batterieanordnung in das Gebäudeversorgungsnetz eingespeist wird, wenn eine an einer Ladestation vorhandene mobile Batterieanordnung und ein Leistungsbedarf in dem Gebäudeversorgungsnetz detektiert wird. Insbesondere kann die mobile Batterieanordnung (beispielsweise bei entladenen stationären Batterieanordnungen) verwendet werden, um ein Leistungsbedarf in dem Gebäudeversorgungsnetz zu decken. Die Einspeisung durch eine mobile Batterieanordnung kann beispielsweise gegenüber einer Einspeisung durch ein öffentliches Versorgungsnetz über den Hausanschluss Priorität haben.

Es versteht sich, dass Nutzervorgaben (wie ein vorgegebener Mindestladezustand der mobilen Batterieanordnung zum Beispiel zu einem bestimmten Zeitpunkt) ggf. bei der Steuerung zu berücksichtigen sind.

Ein weiterer Aspekt der Anmeldung ist ein Verfahren zum Betreiben eines elektrischen Versorgungssystems, insbesondere eines zuvor beschriebenen elektrischen Versorgungssystems, wobei das elektrische Versorgungssystem mindestens zwei stationäre Batterieanordnungen umfasst, jeweils umfassend mindestens eine wiederaufladbare Batterieeinheit und mindestens einen Wechselrichter, wobei die Batterieanordnungen durch eine Schaltungsanordnung, umfassend mindestens ein Schaltelement, mit einem Gebäudeversorgungsnetz elektrisch verbindbar sind. Das Verfahren umfasst:
- Ansteuern, durch eine Batteriesteuerung, der Schaltungsanordnung bei einem Einspeisevorgang zum Bewirken einer elektrischen Verbindung des Gebäudeversorgungsnetzes mit den Batterieanordnungen, derart, dass nur durch eine erste stationäre Batterieanordnung der mindestens zwei stationären Batterieanordnungen elektrische Leistung in das Gebäudeversorgungsnetz eingespeist wird, bis zum Erreichen mindestens eines vorgegebenen Umschaltkriteriums.

Ein noch weiterer Aspekt der Anmeldung ist ein Computerprogramm mit Softwarecode, der so angepasst ist, dass, wenn der Softwarecode durch einen Prozessor der Batteriesteuerung ausgeführt wird, das zuvor beschriebene Verfahren durchgeführt wird.

Das Computerprogramm, insbesondere die Instruktionen bzw. Programmanweisungen, können in einem Computerprogrammprodukt gespeichert sein, insbesondere einem Programmspeicher. Zum Beispiel ist ein Programmspeicher ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher.

Zusätzlich kann eine Batteriesteuerung einen Hauptspeicher aufweisen, zum Beispiel einen flüchtigen oder nicht-flüchtigen Speicher, insbesondere einen Speicher mit wahlfreiem-Zugriff (RAM), wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM). Der Prozessor der Batteriesteuerung kann beispielsweise Zwischenergebnisse oder ähnliches in dem Hauptspeicher speichern.

Ein zuvor beschriebene Einheit, Steuerung etc. kann zumindest teilweise Hardwareelemente (z.B. Prozessor, Speichermittel etc.) und/oder zumindest teilweise Softwareelemente (z.B. ausführbaren Code) umfassen.

Die Merkmale der elektrischen Versorgungssysteme für ein Gebäude, Verfahren und Computerprogramme sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das anmeldungsgemäße elektrische Versorgungssystem für ein Gebäude, das anmeldungsgemäße Verfahren und das anmeldungsgemäße Computerprogramm auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines elektrischen Versorgungssystems für ein Gebäude gemäß der vorliegenden Anmeldung, und
- Fig. 2: eine schematische Ansicht eines Ausführungsbeispiels eines Verfahrens gemäß der vorliegenden Anmeldung zum Betreiben eines elektrischen Versorgungssystem für ein Gebäude.

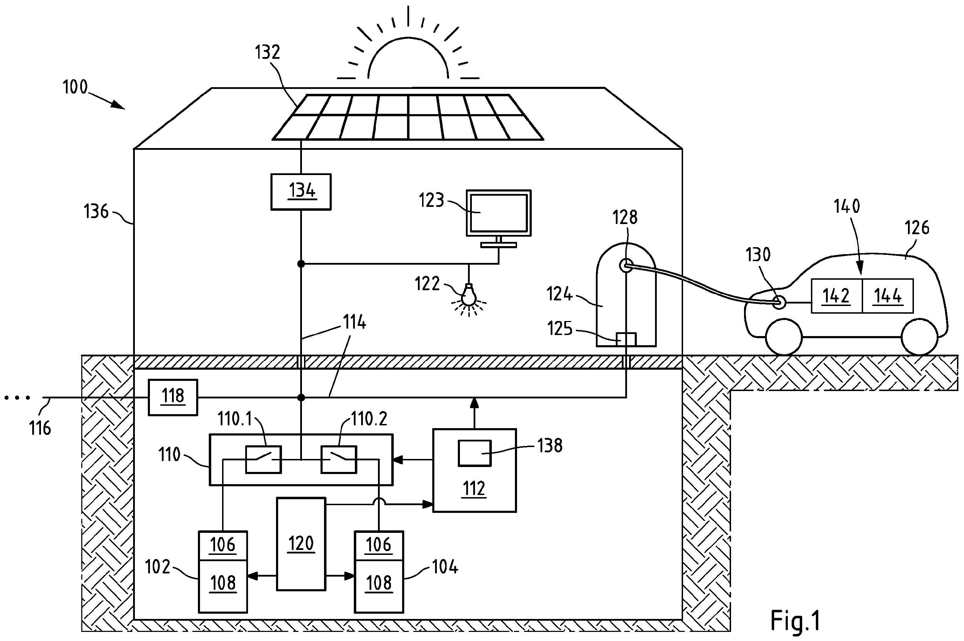

Die Figur 1 zeigt eine schematische Ansicht eines Ausführungsbeispiels eines elektrischen Versorgungssystems 100 für ein Gebäude 136 gemäß der vorliegenden Anmeldung. Das elektrische Versorgungsnetz 100 weist vorliegend beispielhaft zwei Batterieanordnungen 102, 104 auf. Es versteht sich, dass bei anderen Varianten der Anmeldung drei oder mehr Batterieanordnungen vorgesehen sein können. Insbesondere können die nachfolgenden Ausführungen auch auf drei oder mehr Batterieanordnungen übertragen werden.

Wie zu erkennen ist, weist jede Batterieanordnung 102, 104 jeweils mindestens einen Wechselrichter 106 und jeweils mindestens eine Batterieeinheit 108 auf. Zusätzlich kann jede Batterieanordnung 102, 104 über ein (nicht gezeigtes) Ladegerät verfügen.

Eine Batterieeinheit 108, insbesondere ein Akkumulator 108, umfasst vorliegend eine Vielzahl von wiederaufladbaren Batteriezellen. Eine Batterieeinheit 108 ist insbesondere über den mindestens einen Wechselrichter 106 mit einer (gemeinsamen) Schaltungsanordnung 110 verbunden.

Die dargestellte Schaltungsanordnung 110 ist eingerichtet zum elektrischen Verbinden (und Trennen) der Batterieanordnungen 102, 104 mit einem Gebäudeversorgungsnetz 114 des Gebäudes 136. Wie zu erkennen ist, weist die Schaltungsanordnung 110 in dem vorliegenden Ausführungsbeispiel zwei Schaltelemente 110.1, 110.2 bzw. Schalter 110.1, 110.2 auf.

Ein erstes Schaltelement 110.1 ist der Batterieanordnung 102 und ein weiteres Schaltelement 110.2 der weiteren Batterieanordnung 104 zugeordnet. Das erste Schaltelement 110.1 ist eingerichtet, eine elektrische Verbindung zwischen der Batterieanordnung 102 und dem Gebäudeversorgungsnetz 114 herzustellen und zu trennen. Das weitere Schaltelement 110.2 ist eingerichtet, eine elektrische Verbindung zwischen der Batterieanordnung 104 und dem Gebäudeversorgungsnetz 114 herzustellen und zu trennen.

Die Schaltungsanordnung 110 ist durch eine Batteriesteuerung 112 ansteuerbar. Die Batteriesteuerung 112 kann insbesondere einen Prozessor 138 umfassen, um die Schaltungsanordnung 110 entsprechend mindestens einer in der Batteriesteuerung 112 implementierten Steuerregel anzusteuern. Beispielsweise kann die Schaltungsanordnung 110 mit einem Ansteuersignal angesteuert werden, das als Instruktionen Schaltzustandsvorgaben (geschlossen oder geöffnet) für die vorliegend zwei Schaltelemente 110.1, 110.2 enthalten.

Das Gebäudeversorgungsnetz 114 umfasst elektrische Leitungen und dient dazu, mindestens einen elektrische Verbraucher 122, 123, 124 und/oder mindestens einen elektrischen Erzeuger 132 miteinander und insbesondere mit der Schaltungsanordnung 110 zu verbinden. Lediglich beispielhaft sind vorliegend als elektrische Verbraucher eine Beleuchtung 122 und ein Fernsehgerät 123 dargestellt. Es versteht sich, dass bei anderen Varianten andere und/oder weitere elektrische Verbraucher, wie Waschmaschinen, Kaffeemaschinen, Computer etc. vorgesehen sein können.

Ferner umfasst das Versorgungssystem 100 vorliegend eine Ladestation 124 zum Laden von Elektrofahrzeugen 126. Die Ladestation 124 kann insbesondere eine Wechselstrom-Ladestation 124 sein. Ein Elektrofahrzeug 126 weist vorliegend einen Ladeanschluss 130, und eine mobile Batterieanordnung 140 mit einem Gleichrichter 142 und einer Speicherbatterieeinheit 144 (insbesondere eine Traktionsspeicherbatterie 144) auf. Der Gleichrichter 142 wird insbesondere von einer (nicht dargestellten) Steuereinheit des Elektrofahrzeugs 126 so gesteuert, dass ein elektrischer Ladestrom gesteuert bzw. geregelt wird.

Die Wechselstrom-Ladestation 124 ist elektrisch über einen Eingangsanschluss 125 mit dem Gebäudeversorgungsnetz 114 verbunden. Die vorliegende Wechselstrom-Ladestation 124 kann als Ladesäule 100 gebildet sein und insbesondere einen Innenraum umschließendes Gehäuse umfassen, das beispielsweise durch eine umlaufende Gehäusewand gebildet ist.

Die Wechselstrom-Ladestation 124 weist insbesondere eine elektrische Verbindung zwischen dem Anschluss 125 und einem Ladepunkt 128 auf. Es versteht sich, dass zwei oder mehr Ladepunkte vorgesehen sein können. Der Ladepunkt 128, beispielsweise eine Ladesteckerbuchse 128, ist eingerichtet zum Anschließen eines Ladekabels. Über das Ladekabel kann in herkömmlicher Weise elektrische Leistung zwischen der Wechselstrom-Ladestation 124 und dem Elektrofahrzeug 126 bzw. dessen mobile Batterieanordnung 140 ausgetauscht werden.

Darüber hinaus ist beispielhaft als elektrischer Erzeuger 132 eine Photovoltaikanlage 132 vorgesehen, die über einen Wechselrichter 134 mit dem Gebäudeversorgungsnetz 114 verbunden ist. Es versteht sich, dass alternativ oder zusätzlich auch andere Erzeuger vorgesehen sein können.

Das (interne) Gebäudeversorgungsnetz 114 ist zudem über einen Hausanschluss 118 bzw. Gebäudeanschluss 118 mit einem Versorgungsnetz 116 verbindbar, beispielsweise ein Ortsnetz 116.

Darüber hinaus ist mindestens eine Detektionseinheit 120 vorgesehen, insbesondere eingerichtet zum Überwachen des jeweiligen Zustands der zumindest zwei Batterieanordnungen 102, 104. Die Detektionseinheit 120 kann insbesondere mindestens einen Sensor umfassen, eingerichtet zum (kontinuierlichen) Messen des jeweiligen Ladezustands der zumindest zwei Batterieeinheiten 108 der Batterieanordnungen 102, 104. Es versteht sich, dass bei anderen Varianten weitere Batterieanordnungssensoren vorgesehen sein können, wie Temperatursensoren etc.

Die erfassten, insbesondere gemessenen Ladezustandswerte können der Batteriesteuerung 112 zur Verfügung gestellt werden. Bei anderen Varianten der Anmeldung kann der Batteriesteuerung 112 auch nur gemeldet werden, wenn ein erster (oder zweiter) Ladezustandsgrenzwert (von beispielsweise einer Mehrzahl an vorgegebenen Ladezustandsgrenzwerten) bei einer Batterieeinheit über- oder unterschritten (bzw. erreicht) wird. In diesem Fall kann die Auswertung zumindest teilweise durch die Detektionseinheit 120 erfolgen.

Darüber hinaus können weitere (zu Gunsten einer besseren Übersicht nicht dargestellte) Sensoren vorgesehen sein. Beispielsweise kann die Batteriesteuerung 112 mindestens einen Netzparameter (z.B. Netzspannung, Netzfrequenz und/oder Netzfrequenz) des Gebäudeversorgungsnetzes 114 gemessen.

Auch kann vorgesehen sein, dass entsprechende Parameterwerte von anderen Einheiten, wie einer zusätzlichen Detektionseinheit und/oder einem Wechselrichter 106, 134 bereitgestellt werden.

Zudem kann eine Kommunikation zwischen der Batteriesteuerung 112 und weiteren Einheiten des Versorgungssystems 100, wie der Ladestation 124 (und/oder der mobilen Batterieanordnung 140) und/oder der Photovoltaikanlage 132, erfolgen, um insbesondere Daten auszutauschen, wie elektrische Leistungsdaten (z.B. eine Leistungsanforderung durch die Ladestation 124) und/oder Zustandsdaten einer mobilen Batterieanordnung 140 (z.B. augenblicklicher Ladezustand der Batterieanordnung 140).

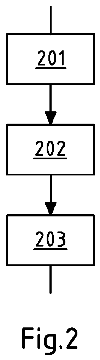

Die Funktionsweise des elektrischen Versorgungsnetzes 100 wird nachfolgend beispielhaft mit Hilfe der Figur 2 näher erläutert. Die Figur 2 zeigt eine schematische Ansicht eines Ausführungsbeispiels eines Verfahrens gemäß der vorliegenden Anmeldung zum Betreiben eines elektrischen Versorgungssystems 100 für ein Gebäude 136. Das Verfahren dient insbesondere zumindest dazu, einen Einspeisevorgang durch die zumindest zwei Batterieanordnungen 102, 104 zu steuern.

In einem ersten Schritt 201 kann insbesondere die Batteriesteuerung 112 eine Anforderung zum Starten eines Einspeisevorgangs erhalten. Beispielsweise kann detektiert werden (z.B. durch Auswerten eines gemessenen Netzparameters des Gebäudeversorgungsnetzes 114), dass derzeit die elektrischen Verbraucher 122, 123, 124 mehr Leistung aus dem Gebäudeversorgungsnetz 114 entnehmen, als der Erzeuger 132 derzeit in das Gebäudeversorgungsnetz 114 einspeist.

Grundsätzlich wäre bei dem zuvor beschriebenen Netzzustand auch denkbar, dass Leistung aus dem Versorgungsnetz 116 und/oder der mobilen Batterieanordnung 140 bezogen wird. Vorzugsweise ist bei dem anmeldungsgemäßen Versorgungsystem 100 die grundsätzlich Regelung vorgesehen, dass bei dem zuvor beschriebenen Netzzustand zunächst auf die stationären Batterieanordnungen 102, 104, dann auf evtl. vorhandene mobile Batterieanordnungen 140 und (erst) dann auf das Versorgungsnetz 116 zurückgegriffen wird (zusätzlich kann vorgesehen sein, dass beispielsweise vor einem Bezug von Leistung aus dem Versorgungsnetz 116 zunächst elektrische Verbraucher (temporär) deaktiviert werden).

Wenn festgestellt wird, dass derzeit der Erzeuger 132 mehr Leistung in das Gebäudeversorgungsnetz 114 einspeist, als die Verbraucher 122, 123, 124 entnehmen, kann insbesondere die überschüssige Leistung zunächst in die stationären Batterieanordnungen 102, 104, dann in die evtl. vorhandene mobile Batterieanordnungen 140 und (erst) dann in das Versorgungsnetz 116 geladen bzw. eingespeist werden (zusätzlich kann vorgesehen sein, dass beispielsweise vor einer Einspeisung von Leistung in das Versorgungsnetz 116 zunächst elektrische Verbraucher (temporär) aktiviert werden).

In Schritt 202 erfolgt ein Ansteuern der Schaltungsanordnung 110 (aufgrund der Detektion der Anforderung zum Starten eines Einspeisevorgangs) durch die Batteriesteuerung 112. Insbesondere erfolgt in Schritt 202 ein Ansteuern, durch die Batteriesteuerung 112, der Schaltungsanordnung 110 während eines Einspeisens elektrischer Leistung in das Gebäudeversorgungsnetz 114 zum Bewirken eines Verschaltens des Gebäudeversorgungsnetzes 114 mit den Batterieanordnungen 102, 104, derart, dass nur durch eine erste stationäre Batterieanordnung (vorliegend beispielsweise die Batterieanordnung 102) der mindestens zwei stationären Batterieanordnungen 102, 104 elektrische Leistung in das Gebäudeversorgungsnetz 114 bis zum Erreichen eines vorgegebenen Einspeisekriteriums eingespeist wird.

Insbesondere kann die Schaltungsanordnung 110 so angesteuert werden, dass das Schaltelement 110.1 geschlossen ist und das Schaltelement 110.2 geöffnet ist, so dass ein Stromfluss nur von der ersten Batterieanordnung 102 in das Gebäudeversorgungsnetz 114 möglich ist.

Insbesondere kann eine Nutzungsreihenfolge der mindestens zwei Batterieanordnungen 102 und 104 festgelegt bzw. bestimmt sein, vorzugsweise durch die Batteriesteuerung 112. Vorliegend wird angenommen, dass die derzeit gültige Nutzungsreihenfolge festlegt, dass die Batterieanordnung 102 die erste Batterieanordnung 102 ist, die bei einer Anforderung zur Durchführung eines Einspeisevorgangs zu nutzen ist, und dass die die Batterieanordnung 104 die zweite Batterieanordnung 104 ist, die bei einem Einspeisevorgang zu nutzen ist.

Vorzugsweise kann vorgesehen sein, dass die Nutzungsreihenfolge zu bestimmten Zeitpunkten, insbesondere regelmäßig, geändert wird, insbesondere nach einem vorgegebenen rollierenden Wechselschema. Dies meint im vorliegenden Ausführungsbeispiel, dass für eine Zeitspanne x (z.B. 7 Tage) die Batterieanordnung 102 die erste Batterieanordnung ist und nach Ablauf dieser Zeitspanne x für eine nächste Zeitspanne x die Batterieanordnung 104 die erste Batterieanordnung ist. Die Zeitspanne kann stets gleich lang sein.

Während des Einspeisevorgangs in Schritt 202 kann im vorliegenden Ausführungsbeispiel zumindest der Ladezustand der Batterieeinheit 108 von der (derzeitigen) ersten Batterieanordnung 102 (nahezu) kontinuierlich überwacht, insbesondere durch die Detektionseinheit 120, gemessen werden. Das mindestens eine Umschaltkriterium kann vorzugsweise ein vorgegebener erster Ladezustandsgrenzwert sein. Beispielhaft wird von einem vorgegebenen ersten Ladezustandsgrenzwert von 20 % ausgegangen.

Die Detektionseinheit 120 (und/oder die Batteriesteuerung 112) kann die gemessenen Ladezustandswerte der Batterieeinheit 108 von der (derzeitigen) ersten Batterieanordnung 102 (nahezu) kontinuierlich mit dem vorgegebenen ersten Ladezustandsgrenzwert von 20 % vergleichen. Ein Erreichen des mindestens einen vorgegebenen Einspeisekriteriums wird im vorliegenden Ausführungsbeispiel dadurch detektiert, dass ein Unterschreiten (bzw. Erreichen) des vorgegebenen ersten Ladezustandsgrenzwerts durch den augenblicklichen Ladezustand der augenblicklich einspeisenden Batterieanordnung 102 detektiert wird.

Bei einer Detektion eines Erreichens des mindestens einen vorgegebenen Einspeisekriteriums wird der Einspeisevorgang mit Schritt 203 fortgefahren. In Schritt 203 erfolgt, durch die Batteriesteuerung 112, ein Ansteuern der Schaltungsanordnung 110 zum Bewirken einer elektrischen Verbindung des Gebäudeversorgungsnetzes 114 mit den Batterieanordnungen 102, 104, derart, dass nur durch die zweite stationäre Batterieanordnung (vorliegend beispielsweise die Batterieanordnung 104) der mindestens zwei stationären Batterieanordnungen 102, 104 elektrische Leistung in das Gebäudeversorgungsnetz 114 eingespeist wird, wenn das mindestens eine vorgegebene Umschaltkriterium erreicht ist.

Insbesondere kann die Schaltungsanordnung 110 so angesteuert werden, dass das Schaltelement 110.2 geschlossen ist und das Schaltelement 110.1 geöffnet ist, so dass ein Stromfluss nur von der zweiten Batterieanordnung 104 in das Gebäudeversorgungsnetz 114 möglich ist.

Es versteht sich, dass ein Einspeisevorgang beendet wird, wenn beispielsweise sich der Netzzustand des Gebäudeversorgungsnetzes geändert hat und keine Einspeisung mehr erforderlich ist oder die stationären Batterieanordnungen leer sind, also der Ladezustand unter einem vorgegebenen minimalen Grenzwert liegt.

Optional kann ein zusätzliches weiteres Umschaltkriterium vorgesehen sein. Das mindestens eine vorgegebene (weitere) Umschaltkriterium kann ein vorgegebener Leistungsgrenzwert sein. Die Batteriesteuerung 112 kann eingerichtet sein zum Ansteuern der Schaltungsanordnung 110 bei einem Einspeisevorgang zum Bewirken einer elektrischen Verbindung des Gebäudeversorgungsnetzes 114 mit den Batterieanordnungen 102, 104, derart, dass zumindest durch die zwei stationären Batterieanordnung102, 104 elektrische Leistung (gleichzeitig) in das Gebäudeversorgungsnetz 114 eingespeist wird, wenn eine bereitgestellte Leistungsanforderung den vorgegebenen Leistungsgrenzwert (z.B. zwischen 3 und 20 kW, vorzugsweise zwischen 5 und 12 kW) übersteigt. Insbesondere kann die Schaltungsanordnung 110 so angesteuert werden, dass das Schaltelement 110.2 geschlossen ist und das Schaltelement 110.1 geschlossen ist, so dass ein Stromfluss von der ersten Batterieanordnung 102 und der zweiten Batterieanordnung 104 in das Gebäudeversorgungsnetz 114 möglich ist.

Ferner kann optional einen Ladevorgang durchgeführt werden, um die Batterieeinheiten 108 wiederaufzuladen. Die Batteriesteuerung 112 kann eingerichtet sein zum Ansteuern der Schaltungsanordnung 110 bei einem Ladevorgang zum Bewirken einer elektrischen Verbindung des Gebäudeversorgungsnetzes 114 mit den Batterieanordnungen 102, 104 insbesondere abhängig von der augenblicklich gültigen Nutzungsreihenfolge, also insbesondere derart, dass nur die erste stationäre Batterieanordnung 102 der mindestens zwei stationären Batterieanordnungen 102, 104 geladen wird, bis zum Erreichen eines vorgegebenen Ladekriteriums (z.B. ein Lademindestzustand von 80 %).

Die Batteriesteuerung 112 kann insbesondere eingerichtet sein zum Ansteuern der Schaltungsanordnung 110 bei einem Ladevorgang zum Bewirken einer elektrischen Verbindung des Gebäudeversorgungsnetzes 114 mit den Batterieanordnungen 102, 104, derart, dass nur die zweite stationäre Batterieanordnung 104 der mindestens zwei stationären Batterieanordnungen 102, 104 geladen wird, wenn das Ladekriterium erreicht ist. In entsprechender Weise kann fortgefahren werden, wenn drei oder mehr Batterieanordnungen vorgesehen sind.

Optional kann die Batteriesteuerung eingerichtet sein zum Ansteuern der Ladestation 124, derart, dass elektrische Leistung durch die mobile Batterieanordnung 140 in das Gebäudeversorgungsnetz 114 eingespeist wird, wenn eine an einer Ladestation 124 vorhandene mobile Batterieanordnung 140 und ein Leistungsbedarf in dem Gebäudeversorgungsnetz 114 (also wenn beispielsweise mehr Leistung entnommen wird, als durch den Erzeuger 132 eingespeist wird) detektiert wird. Insbesondere kann die mobile Batterieanordnung 140 (beispielsweise bei entladenen stationären Batterieanordnungen 102, 104 verwendet werden, um ein Leistungsbedarf in dem Gebäudeversorgungsnetz 114 zu decken.

Durch eine intelligente Steuerung können die Verbraucher so angesprochen/betrieben werden, dass alle Verbraucher/Geräte ohne Komforteinbußen des Nutzers, nach Möglichkeit an Ihrem Wirkungsgradoptimum betrieben werden können. Zusätzlich können die Batterieanordnungen optimiert entsprechend der Ladezustände betrieben werden. Gerade die Ladezustände (97% bis 100%) benötigen einen höheren Energieeinsatz.

### Beispiel:

Zwei Batteriespeicher werden nicht parallel betrieben, sondern sequentiell nacheinander, so dass zunächst die erste Batterie betrieben wird, bis sie an Ihrem Wirkungsgradoptimum angekommen ist. Sollte der Verbrauch steigen, wird erst die zweite /x-te Batterie zugeschaltet, sobald diese direkt im Optimum betrieben werden kann. Weiterhin sind ab weniger effizienteren Ladezuständen die anderen Batterieanordnungen zu verwenden. Erst wenn alle Batterieanordnungen die effizienten Ladezustände überschritten haben, sollten die verbleibenden Kapazitäten bis zu einer zulässigen unteren Grenze genutzt werden.

## Patentansprüche

1. Elektrisches Versorgungssystem (100) für ein Gebäude (136), umfassend:
- mindestens zwei stationäre Batterieanordnungen (102, 104), jeweils umfassend mindestens eine wiederaufladbare Batterieeinheit (108) und mindestens einen Wechselrichter (106),
- mindestens eine Schaltungsanordnung (110) mit mindestens einem Schaltelement (110.1, 110.2), zumindest eingerichtet zum elektrischen Verbinden der Batterieanordnungen (102, 104) mit einem Gebäudeversorgungsnetz (114) des Gebäudes (136),
- mindestens eine Batteriesteuerung (112), eingerichtet zum Ansteuern der Schaltungsanordnung (110) bei einem Einspeisevorgang zum Bewirken einer elektrischen Verbindung des Gebäudeversorgungsnetzes (114) mit den Batterieanordnungen (102, 104), derart, dass nur durch eine erste stationäre Batterieanordnung (102, 104) der mindestens zwei stationären Batterieanordnungen (102, 104) elektrische Leistung in das Gebäudeversorgungsnetz (114) eingespeist wird, bis zum Erreichen mindestens eines vorgegebenen Umschaltkriteriums.

2. Elektrisches Versorgungssystem (100) nach Anspruch 1, **dadurch gekennzeichnet, dass**
- die Batteriesteuerung (112) eingerichtet ist zum Ansteuern der Schaltungsanordnung (110) zum Bewirken einer elektrischen Verbindung des Gebäudeversorgungsnetzes (114) mit den Batterieanordnungen (102, 104), derart, dass nur durch die zweite stationäre Batterieanordnung (102, 104) der mindestens zwei stationären Batterieanordnungen (102, 104) elektrische Leistung in das Gebäudeversorgungsnetz (114) eingespeist wird, wenn das mindestens eine vorgegebene Umschaltkriterium erreicht ist.

3. Elektrisches Versorgungssystem (100) nach Anspruch 1 oder 2, **dadurch gekennzeichnet, dass**
- das mindestens eine vorgegebene Umschaltkriterium ein vorgegebener erster Ladezustandsgrenzwert ist, und
- das elektrisches Versorgungssystem (100) mindestens eine Detektionseinheit (120) umfasst, eingerichtet zum Detektieren eines Unterschreitens des vorgegebenen ersten Ladezustandsgrenzwerts durch den augenblicklichen Ladezustand der augenblicklich einspeisenden Batterieanordnung (102, 104).

4. Elektrisches Versorgungssystem (100) nach einem der vorherigen Ansprüche, **dadurch gekennzeichnet, dass**
- die Batteriesteuerung (112) eingerichtet ist zum Festlegen einer Nutzungsreihenfolge der mindestens zwei stationären Batterieanordnungen (102, 104),
- wobei die Nutzungsreihenfolge zumindest festlegt, welche stationäre Batterieanordnung (102, 104) der mindestens zwei stationären Batterieanordnungen (102, 104) bei einer Anforderung zur Durchführung eines Einspeisevorgangs die erste stationäre Batterieanordnung (102, 104) ist.

5. Elektrisches Versorgungssystem (100) nach Anspruch 4, **dadurch gekennzeichnet, dass**
- die Batteriesteuerung (112) eingerichtet ist zum Ändern der Nutzungsreihenfolge nach Ablauf eines Zeitkriteriums, insbesondere einer vorgegebenen Zeitspanne,
- wobei die Änderung der Nutzungsreihenfolge insbesondere auf einem rollierenden Wechselschema basiert.

6. Elektrisches Versorgungssystem (100) nach einem der vorherigen Ansprüche, **dadurch gekennzeichnet, dass**
- die Batteriesteuerung (112) eingerichtet ist zum Ansteuern der Schaltungsanordnung (110) bei einem Ladevorgang zum Bewirken einer elektrischen Verbindung des Gebäudeversorgungsnetzes (114) mit den Batterieanordnungen (102, 104), derart, dass nur die erste stationäre Batterieanordnung (102, 104) der mindestens zwei stationären Batterieanordnungen (102, 104) geladen wird bis zum Erreichen eines vorgegebenen Ladekriteriums, und
- die Batteriesteuerung (112) insbesondere eingerichtet ist zum Ansteuern der Schaltungsanordnung (110) bei einem Ladevorgang zum Bewirken einer elektrischen Verbindung des Gebäudeversorgungsnetzes (114) mit den Batterieanordnungen (102, 104), derart, dass nur die zweite stationäre Batterieanordnung (102, 104) der mindestens zwei stationären Batterieanordnungen (102, 104) geladen wird, wenn das Ladekriterium erreicht ist.

7. Elektrisches Versorgungssystem (100) nach einem der vorherigen Ansprüche, **dadurch gekennzeichnet, dass**
- das vorgegebene Ladekriterium ein vorgegebener zweiter Ladezustandsgrenzwert ist, und
- das elektrisches Versorgungssystem (100) mindestens eine Detektionseinheit (120) umfasst, eingerichtet zum Detektieren eines Überschreiten des vorgegebenen zweiten Ladezustandsgrenzwerts durch den augenblicklichen Ladezustand der augenblicklich ladenden Batterieanordnung (102, 104).

8. Elektrisches Versorgungssystem (100) nach einem der vorherigen Ansprüche, **dadurch gekennzeichnet, dass**
- das mindestens eine vorgegebene Umschaltkriterium ein vorgegebener Leistungsgrenzwert ist, und
- die Batteriesteuerung (112) eingerichtet ist, zum Ansteuern der Schaltungsanordnung (110) bei einem Einspeisevorgang zum Bewirken einer elektrischen Verbindung des Gebäudeversorgungsnetzes (114) mit den Batterieanordnungen (102, 104), derart, dass zumindest durch die zwei stationären Batterieanordnung (102, 104) elektrische Leistung in das Gebäudeversorgungsnetz (114) eingespeist wird, wenn eine bereitgestellte Leistungsanforderung den vorgegebenen Leistungsgrenzwert übersteigt.

9. Elektrisches Versorgungssystem (100) nach einem der vorherigen Ansprüche, **dadurch gekennzeichnet, dass**
- die Batteriesteuerung (112) eingerichtet ist, zum Ansteuern der Ladestation (124), derart, dass elektrische Leistung durch die mobile Batterieanordnung (102, 104) in das Gebäudeversorgungsnetz (114) eingespeist wird, wenn eine an einer Ladestation (124) vorhandenen mobilen Batterieanordnung (102, 104) und ein Leistungsbedarf in dem Gebäudeversorgungsnetz (114) detektiert wird.

10. Verfahren zum Betreiben eines elektrischen Versorgungssystems (100), insbesondere eines elektrischen Versorgungssystems (100) nach einem der vorherigen Ansprüche, wobei das elektrische Versorgungssystem (100) mindestens zwei stationäre Batterieanordnungen (102, 104) umfasst, jeweils umfassend mindestens eine wiederaufladbare Batterieeinheit (108) und mindestens einen Wechselrichter (106), wobei die Batterieanordnungen (102, 104) durch eine Schaltungsanordnung (110), umfassend mindestens ein Schaltelement (110.1, 110.2), mit einem Gebäudeversorgungsnetz (114) elektrisch verbindbar sind, das Verfahren umfassend:
- Ansteuern, durch eine Batteriesteuerung (112), der Schaltungsanordnung (110) bei einem Einspeisevorgang zum Bewirken einer elektrischen Verbindung des Gebäudeversorgungsnetzes (114) mit den Batterieanordnungen (102, 104), derart, dass nur durch eine erste stationäre Batterieanordnung (102, 104) der mindestens zwei stationären Batterieanordnungen (102, 104) elektrische Leistung in das Gebäudeversorgungsnetz (114) eingespeist wird, bis zum Erreichen mindestens eines vorgegebenen Umschaltkriteriums.

11. Computerprogramm mit Softwarecode, der so angepasst ist, dass, wenn der Softwarecode durch einen Prozessor (138) einer Batteriesteuerung (112) ausgeführt wird, das Verfahren nach Anspruch 10 durchgeführt wird.
